# EUROPÄISCHE PATENTSCHRIFT

(11) **EP 2 674 309 B1**
(45) Veröffentlichungstag und Bekanntmachung des Hinweises auf die Patenterteilung: **12.11.2014**
(21) Anmeldenummer: 13163350.5
(22) Anmeldetag: 11.04.2013
(51) Int. Cl.: B60G 21/05

(54) **Verbundlenkerachse mit Verstärkungsblech**
Torsion beam axle with reinforcement sheet
Essieu à traverse déformable avec tôle de renfort

(30) Priorität: 11.06.2012 DE 102012104999
(43) Veröffentlichungstag der Anmeldung: 18.12.2013
(73) Patentinhaber: Benteler Automobiltechnik GmbH, 33102 Paderborn (DE)
(72) Erfinder: Frost, Georg, 32839 Steinheim (DE)
(74) Vertreter: Griepenstroh, Jörg

(56) Entgegenhaltungen:
- DE-A1- 19 846 400
- DE-A1-102008 036 340
- DE-A1-102009 024 831
- US-A1- 2007 108 714

## Beschreibung

Die vorliegende Erfindung betrifft ein Verfahren zum Herstellen einer Verbundlenkerachse gemäß den Merkmalen im Oberbegriff von Patentanspruch 1.

Die vorliegende Erfindung betrifft weiterhin eine Verbundlenkerachse gemäß den Merkmalen im Oberbegriff von Patentanspruch 3.

Aus dem Stand der Technik sind Verbundlenkerachsen bekannt, die in Kraftfahrzeugen insbesondere als Hinterachse eingesetzt werden. Solche Verbundlenkerachsen bestehen aus einem mittleren Torsionsprofil, das sich im Wesentlichen über die Kraftfahrzeugbreite erstreckt, mithin also in Kraftfahrzeug Y-Richtung ausgerichtet ist, wobei an den Enden des Torsionsprofils Längsschwingen angeordnet sind, wobei an den Längsschwingen dann wiederum Radträger sowie Räder gekoppelt sind.

Während eines Ein- bzw. Ausfedervorgangs tordiert sich das Torsionsprofil, wobei die Anbindungspunkte der Längsschwingen nach Möglichkeit nicht tordiert werden sollen. Mithin sollen die Anbindungsbereiche der Längsschwingen möglichst steif ausgebildet sein, so dass diese in Verbindung mit den daran gekoppelten Längsschwingen eine hohe Lebensdauererwartung haben. Zumeist sind die Längsschwingen an das Torsionsprofil selbst schweißtechnisch gekoppelt.

Aus dem Stand der Technik ist es daher bekannt, im Bereich der Längsschwingen Verstärkungsbleche einzusetzen. Beispielsweise ist ein solcher Einsatz eines Verstärkungsblechs aus der DE 10 2004 003 152 A1 oder aber auch aus der DE 27 40 948 A1 bekannt.

Das Dokument DE 10 2009 024 831 A1 wird als nächstliegender Stand der Technik angesehen.

Im Wesentlichen besteht ein Torsionsprofil zumeist aus einem C-förmigen oder aber U-förmigen Querschnitt. Das Torsionsprofil selbst kann dabei derart als Hohlprofil ausgebildet sein, dass beispielsweise ein rohrförmiger Querschnitt in einen C-förmigen Querschnitt umgewandelt wird. In den Endbereichen wird ein solcher C-förmiger oder aber U-förmiger Querschnitt durch ein Verstärkungsprofil verstärkt und in sich abgestützt. Ein Verstärkungsblech wird hierzu an die Innenseiten der Schenkel des Querschnittsprofils angeschweißt, wobei sich aufgrund der thermischen Größenänderung unter Einfluss der Schweißnaht unerwünschte Effekte sowohl auf die Maßhaltigkeit der Endbereiche des Torsionsprofils selber als auch auf das Verstärkungsblech einstellen. So ist es möglich, dass das Verstärkungsblech aufgrund eines Schrumpfens der Schweißnaht Mikrorisse ausbildet und somit in sich reißt und/oder die Schenkel des Torsionsprofils zusammengezogen werden, mithin aufeinander zu bewegt werden.

Aufgabe der vorliegenden Erfindung ist es daher, ausgehend vom Stand der Technik eine Verbundlenkerachse sowie ein Verfahren zum Herstellen einer Verbundlenkerachse herzustellen, das gegenüber aus dem Stand der Technik bekannten Herstellungsverfahren verbessert ist, wobei gleichzeitig die Produktionsgenauigkeit, die Lebensdauer sowie die Festigkeit der Verbundlenkerachse steigen und das Bauteilgewicht sinkt.

Die zuvor genannte Aufgabe wird mit einem Verfahren gemäß den Merkmalen im Patentanspruch 1 gelöst.

Der gegenständliche Teil der Aufgabe wird mit einer Verbundlenkerachse für ein Kraftfahrzeug gemäß den Merkmalen im Patentanspruch 3 gelöst.

Vorteilhafte Ausführungsvarianten der vorliegenden Erfindung sind Bestandteil der abhängigen Patentansprüche.

Das erfindungsgemäße Verfahren zum Herstellen einer Verbundlenkerachse, wobei die Verbundlenkerachse aus einem Torsionsprofil sowie endseitig an dem Torsionsprofil angeordneten Längsschwingen ausgebildet wird, ist gekennzeichnet durch folgende Verfahrensschritte:
- Bereitstellen eines im Querschnitt c-förmigen oder u-förmigen Torsionsprofils,
- Bereitstellen eines mit einem Entlastungsschlitz versehenen Verstärkungsbleches,
- Einsetzen des Verstärkungsbleches in einen endseitigen Innenbereich des Torsionsprofils,
- Verschweißen des Verstärkungsbleches an der Innenseite eines ersten Schenkels,
- Verschweißen des Verstärkungsbleches an der Innenseite des zweiten Schenkels und Verschließen des Entlastungsschlitzes durch thermisches Fügen,
- Koppeln der Längsschwingen mit dem Torsionsprofil.

Im Rahmen der Erfindung ist es möglich, das Torsionsprofil aus einem Halbzeug herzustellen, beispielsweise wird das Halbzeug abgelängt.

Das Torsionsprofil ist somit aus einem einwandigen, C-förmigen oder U-förmigen Querschnittsprofil bereit gestellt. Im Rahmen der Erfindung ist es jedoch auch möglich, das Torsionsprofil aus einem doppelwandigen C-förmigen oder U-förmigen Querschnitt herzustellen oder aber beispielsweise auch ein Hybridtorsionsprofil bereit zu stellen. Im Falle eines doppelwandigen Torsionsprofils wird dies insbesondere zunächst durch ein Rohr, das durch ein Eindrücken in einen C-förmigen oder U-förmigen Querschnitt umgeformt wird, bereitgestellt. Im Falle eines Hybridtorsionsprofils werden zwei im Querschnitt C-förmige oder U-förmige Profile übereinander gelegt und miteinander gekoppelt, so dass das Torsionsprofil zweilagig oder aber auch mehrlagig sein kann.

Sodann wird ein Verstärkungsblech bereitgestellt, wobei das Verstärkungsblech einen Entlastungsschlitz aufweist. Das Verstärkungsblech ist somit bevorzugt in einem mittleren Bereich aufgetrennt bzw. aufgeschlitzt. Im Rahmen der Erfindung ist es möglich, den Entlastungsschlitz auch erst nach zumindest teilweisem Koppeln des Verstärkungsblechs mit dem Torsionsprofil in das Verstärkungsblech einzubringen. Produktionstechnisch ist es jedoch vorteilhaft, wenn das Verstärkungsblech bereits mit dem Entlastungsschlitz vorkonfektioniert ist. Das Verstärkungsblech wird sodann in einem endseitigen Innenbereich des Torsionsprofils angeordnet und zunächst mit einer Innenseite eines ersten Schenkels des C- bzw. U-förmigen Torsionsprofils gekoppelt. Die Kopplung erfolgt insbesondere durch ein thermisches Fügen, ganz besonders bevorzugt durch ein Schweißen, so dass eine Längskante des Verstärkungsblechs mit der Innenseite des Schenkels des Torsionsprofils verschweißt wird.

Sodann wird die gegenüberliegende Längskante des Verstärkungsblechs mit der Innenseite des gegenüberliegenden Schenkels verschweißt. Die aufgrund der thermischen Ausdehnungen bzw. Schrumpfungen entstehenden Spannungen innerhalb des Verstärkungsblechs werden aufgrund des Entlastungsschlitzes nahezu vollständig oder aber in zu vernachlässigender Weise kompensiert. So kann sich das Verstärkungsblech zunächst während des thermischen Fügevorgangs derart ausdehnen, dass die beiden Enden des Entlastungsschlitzes aufeinander zu bewegt werden und in einem abschließenden Abkühlvorgang wiederum derart schrumpfen, dass die Enden des Entlastungsschlitzes voneinander weg bewegt werden und der Entlastungsschlitz sich hierdurch vergrößert.

Ein Reißen des Verstärkungsblechs oder aber die Entstehung von Mikrorissen erfolgt hingegen aufgrund des Entlastungsschlitzes nicht. Nach Koppeln des Verstärkungsblechs mit den Innenseiten der Schenkel des Torsionsprofils wird anschließend die Längsschwinge mit dem Torsionsprofil selbst gekoppelt. Die Längsschwinge kann im Rahmen der Erfindung jedoch auch schon vor Koppelung des Verstärkungsblechs mit dem Torsionsprofil gekoppelt sein. Im Rahmen der Erfindung wird insbesondere durch den Entlastungsschlitz an dem Verstärkungsblech auch eine Relativbewegung der Schenkel zueinander ermöglicht.

Im Rahmen der Erfindung wird weiterhin der Entlastungsschlitz nach dem Koppeln mit dem zweiten Schenkel, mithin bei vollständig in dem Innenbereich des Torsionsprofils eingesetztem Verstärkungsblech, selbst verschlossen. Das Verschließen des Entlastungsschlitzes wird mit einem thermischen Fügevorgang, beispielsweise mit einem Schweißvorgang oder aber auch mit einem Lötvorgang durchgeführt. Im Rahmen der Erfindung wird bereits eine hinreichende Festigkeitssteigerung der Endbereiche des Torsionsprofils durch das Einschweißen des Verstärkungsprofils auch mit dem Entlastungsschlitz erreicht. Durch den Verschließungsvorgang des Entlastungsschlitzes wird diese Verstärkung zum einen weiter gesteigert, zum anderen wird jedoch auch der Entlastungsschlitz im Betrieb des Kraftfahrzeugs vor eindringenden Verschmutzungen und somit vor damit verbundener Korrosion geschützt.

Hierbei kann beispielsweise ein Zweikomponentenklebstoff eingesetzt werden. Insbesondere wird ein aushärtender Klebstoff eingesetzt, der einen Stoffschluss herstellt.

Besonders bevorzugt wird der Entlastungsschlitz derart in dem Verstärkungsblech orientiert bzw. das Verstärkungsblech mit dem Entlastungsschlitz derart orientiert, dass der Entlastungsschlitz sich in Richtung der Mittellängsachse des Torsionsprofils orientiert. Die Schweißnaht zur Koppelung des Schenkels und der Längskante des Verstärkungsblechs ist ebenfalls insbesondere in Richtung der Längsachse des Torsionsprofils orientiert.

Die vorliegende Erfindung betrifft weiterhin eine Verbundlenkachse für ein Kraftfahrzeug, aufweisend ein Torsionsprofil mit endseitig an dem Torsionsprofil angeordneten Längsschwingen, wobei das Torsionsprofil im Querschnitt C-förmig oder U-förmig konfiguriert ist und in einem Innenbereich jeweils endseitig ein Verstärkungsblech mit den Innenseiten der Schenkel thermisch gefügt ist, insbesondere hergestellt nach einem Verfahren gemäß der zuvor genannten Merkmale, wobei die Verbundlenkerachse dadurch gekennzeichnet ist, dass das Verstärkungsblech einen Entlastungsschlitz aufweist, wobei der Entlastungsschlitz insbesondere in Richtung einer Mittellängsachse des Torsionsprofils orientiert ist, wobei der Entlastungsschlitz durch thermisches Fügen verschlossen ist.

Im Rahmen der Erfindung ist es hierdurch möglich, eine Verbundlenkerachse mit einem Torsionsprofil besonders in den Endbereichen torsions- und biegesteif herzustellen, so dass die Längsschwingen besonders dauerhaltbar an das Torsionsprofil gekoppelt werden können. Durch den Entlastungsschlitz in dem Verstärkungsblech selber ist es möglich, die Wandstärke des Verstärkungsblechs derart zu minimieren, dass sie eine hinreichende Steifigkeit bezüglich der Verstärkungsfunktion aufweist, wobei eventuelle thermische Ausdehnungen durch den Fügeprozess mit dem Innenbereich des Torsionsprofils selber durch den Entlastungsschlitz kompensiert werden.

Hierdurch kommt es nicht zu Mikrorissen oder einem inneren Spannungszustand innerhalb des Verstärkungsblechs selber. Hierdurch sinkt das Bauteilgewicht, wobei gleichzeitig die Produktionskosten sinken, da das Fügeverfahren von der Innenseite der Schenkel des Torsionsprofils mit dem Verstärkungsblech nur noch eine hinreichende Schweißqualität aufweisen muss und eventuelle Ausdehnungen des Blechs aufgrund der Wärmeeinwirkung, insbesondere der Wärmeeinflusszone, vernachlässigbar sind.

Der Entlastungsschlitz weist insbesondere einen geradlinigen oder aber auch einen mäanderförmigen Verlauf auf. Der Entlastungsschlitz kann auch wellenförmig oder aber sinusförmig ausgebildet sein, wobei insbesondere eine Hauptrichtung des Entlastungsschlitzes in Richtung der Mittellängsachse des Torsionsprofils orientiert ist. Im Rahmen der Erfindung ist es auch möglich, zwei Entlastungsschlitze oder aber auch mehr Entlastungsschlitze in dem Verstärkungsblech anzuordnen, wobei insbesondere ein Entlastungsschlitz bevorzugt ist. Der Entlastungsschlitz selber erstreckt sich dabei in Längsrichtung des Verstärkungsblechs, die im Wesentlichen auch in Längsrichtung des Torsionsprofils orientiert ist, innerhalb des Verstärkungsblechs. Insbesondere ist der Entlastungsschlitz durch das Verstärkungsblech vollständig durchgreifend ausgebildet, wobei es im Rahmen der Erfindung auch möglich ist, den Entlastungsschlitz nur als Entlastungsnut an dem Verstärkungsblech auszubilden, wobei die Entlastungsnut dann in einen Innenbereich des Torsionsprofils oder aber nach außen orientiert angeordnet ist.

Weiterhin besonders bevorzugt sind an dem Entlastungsschlitz endseitig mindestens eine Ausnehmung ausgebildet, insbesondere eine Entlastungsrundung. Hierdurch können eventuell auftretende Spannungen innerhalb des Verstärkungsblechs in der Ausnehmung kompensiert werden, so dass es nicht zu einem weiteren Reißen des Entlastungsschlitzes kommt. Bevorzugt ist der Entlastungsschlitz in einem mittigen Bereich in dem Verstärkungsblech ausgebildet, er durchschneidet das Verstärkungsblech mithin nicht vollständig oder aber nur einseitig, so dass immer ein Teil des Verstärkungsblechs werkstoffeinheitlich und einstückig durchgehend verbunden bleibt.

Erfindungsgemäß ist der Entlastungsschlitz selbst verschlossen, insbesondere durch einen Klebstoff oder aber auch durch einen thermischen Fügeprozess. Besonders bevorzugt ist der Entlastungsschlitz durch einen Schweißvorgang oder aber einen Lötvorgang verschlossen. Dies steigert zum einen die Steifigkeit des Verstärkungsblechs, zum anderen wird hierdurch das Eindringen von Verschmutzungen in einen Zwischenbereich zwischen dem Querschnittsprofil und dem Verstärkungsblech vermieden.

Im Rahmen der Erfindung ist es weiterhin vorstellbar, dass das Verstärkungsblech selbst Verstärkungsprofilierungen, insbesondere Sicken oder Mulden, aufweist. Hierdurch ist es möglich, gezielt das Verstärkungsblech in seiner Steifigkeit weiter zu steigern, indem eine Verstärkungssicke, eine Versteifungssicke oder aber auch eine Mulde in dem Verstärkungsblech ausgebildet wird. Im Rahmen der Erfindung ist es jedoch auch möglich, beispielsweise durch eine Mulde in dem Verstärkungsblech selbst jedoch eine Entlastungsprofilierung auszubilden, so dass ein Spannungsabbau durch die Mulde und ein entsprechendes Stauchungsverhalten hervorzurufen.

Weiterhin besonders bevorzugt ist die Verbundlenkerachse aus einer Stahllegierung oder aber einer Leichtmetalllegierung ausgebildet. Insbesondere ist die Legierung derart ausgewählt, dass sie in besonders einfacher und kostengünstiger Art und Weise thermisch fügbar, insbesondere schweißbar, ist.

Weiterhin bevorzugt ist das Verstärkungsblech derart in dem Innenbereich des Torsionsprofils angeordnet, dass ein außenseitiges Ende des Verstärkungsblechs an einem ebenfalls außenseitigen Ende des Torsionsprofils abschließt und hier beinahe an die vordere Kante der Schenkel geführt ist, so dass eine Verbindungsgerade zwischen den Schenkeln hergestellt ist. Zur Mitte des Torsionsprofils hin orientiert nähert sich das Entlastungsprofil jedoch dann dem Grundsteg des Torsionsprofils selbst an, so dass es von den äußeren Enden der Schenkel in den Mittelbereich hin orientiert angeordnet wird. Mithin wird das Verstärkungsblech derart in dem Innenbereich des Torsionsprofils angeordnet, dass es schräg gestellt bzw. als Keilform in diesem ausgebildet ist. Hierdurch erfolgt ebenfalls eine Spannungslenkung des Torsionsverlaufs, der von einem Mittelbereich zu den Endbereichen des Torsionsprofils hin zunehmend bzw. abnehmend ausgebildet ist und nicht sprungartig in seiner Intensität variiert.

Weitere Vorteile, Merkmale, Eigenschaften und Aspekte der vorliegenden Erfindung sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1a, 1b: eine Verbundlenkerachse in perspektivischer und Schnittansicht;
- Figur 2a, 2b: einen Endbereich eines Torsionsprofils einer Verbundlenkeransicht in Draufsicht und Schnittansicht;
- Figur 3a, 3b: die Draufsicht auf Figur 2 mit einem erfindungsgemäß geschlitzten Verstärkungsblech und
- Figur 4: ein erfindungsgemäß verschlossenes Verstärkungsblech.

In den Figuren werden für gleiche oder ähnliche Bauteile dieselben Bezugszeichen verwendet, auch wenn eine wiederholte Beschreibung aus Vereinfachungsgründen entfällt.

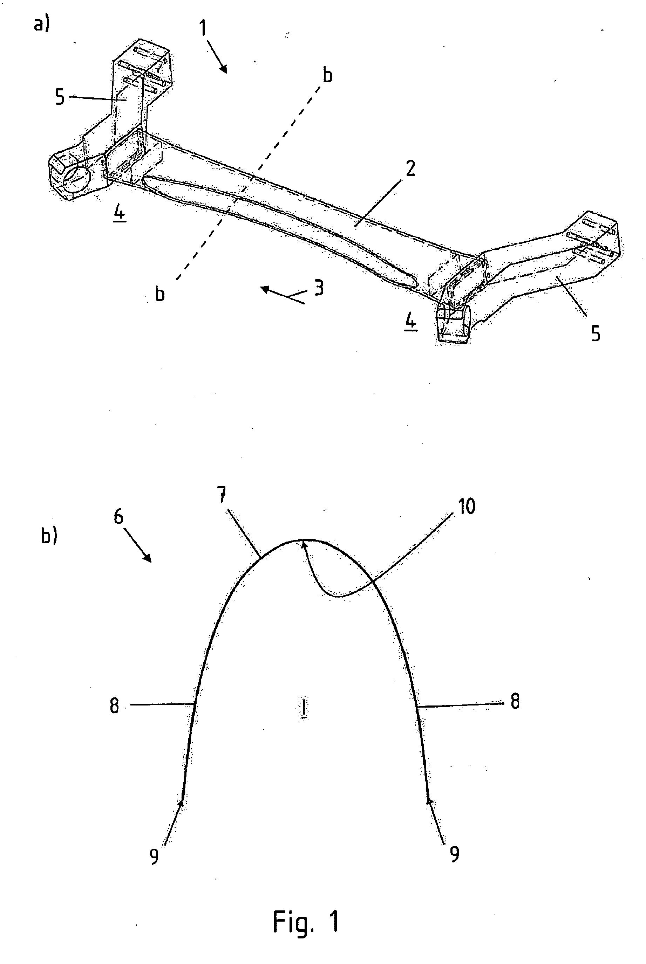

Figur 1a zeigt eine Verbundlenkerachse 1, so wie sie aus dem Stand der Technik bekannt ist. Die Verbundlenkerachse 1 weist hierzu ein Torsionsprofil 2 auf, das sich in seiner Längsrichtung 3 im Wesentlichen über die Fahrzeugbreite erstreckt. An den Enden 4 des Torsionsprofils 2 sind Längsschwingen 5 angeordnet, wobei an den Längsschwingen 5 wiederum nicht näher dargestellte Radträger, Federungskomponente und sonstiges angeordnet sind. Das Torsionsprofil 2 weist gemäß der Schnittlinie b-b einen C-förmig konfigurierten Querschnitt 6 auf, wobei der Querschnitt 6 einen Bodensteg 7 sowie von dem Bodensteg 7 erstreckende Schenkel 8 besitzt. Die Schenkel 8 schließen jeweils mit einer äußeren Kante 9 ab. Im Innenbereich l ist ein Talbereich 10 an dem Bodensteg 7 ausgebildet.

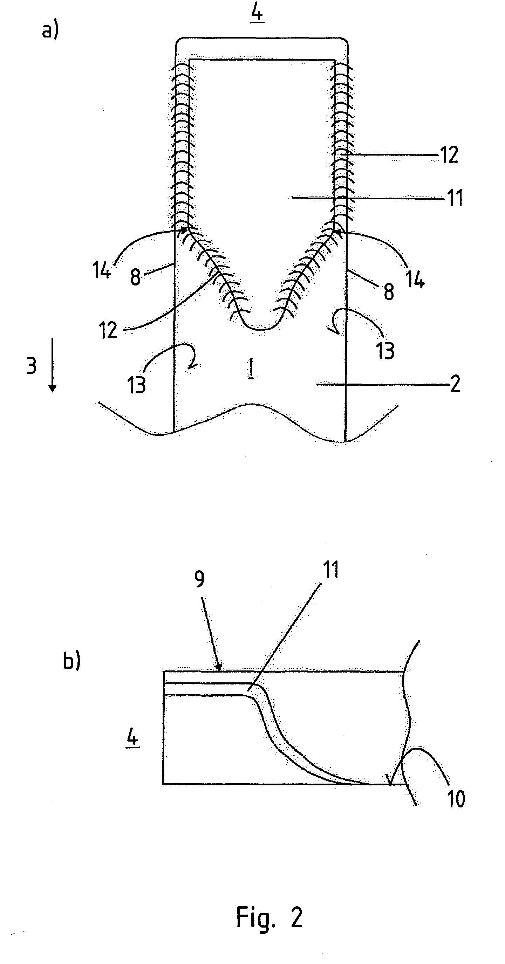

Im Endbereich ist gemäß Figur 2a dargestellt in einer Draufsicht in dem Innenbereich l des Querschnitts 6 ein Verstärkungsblech 11 angeordnet, wobei das Verstärkungsblech 11 von dem Ende 4 des Torsionsprofils 2 hin verlaufend von einer äußeren Kante 9 zu einem Talbereich 10 des Bodenstegs 7 verlaufend angeordnet ist. Mithin verjüngt sich in Längsrichtung 3 des Torsionsprofils 2 verlaufend das Verstärkungsblech 11. Die äußeren Längskanten 12 des Verstärkungsblechs 11 sind dabei mit einer jeweiligen Innenseite 13 der Schenkel 8 durch thermisches Fügen gekoppelt. Hierdurch ergibt sich jeweils eine Schweißnaht 14, die bei der Herstellung durch einen thermischen Ausdehnungs- oder Schrumpfungsvorgang zu einem inneren Spannungszustand oder aber zu Mikrorissen innerhalb des Verstärkungsblechs 11 führen kann.

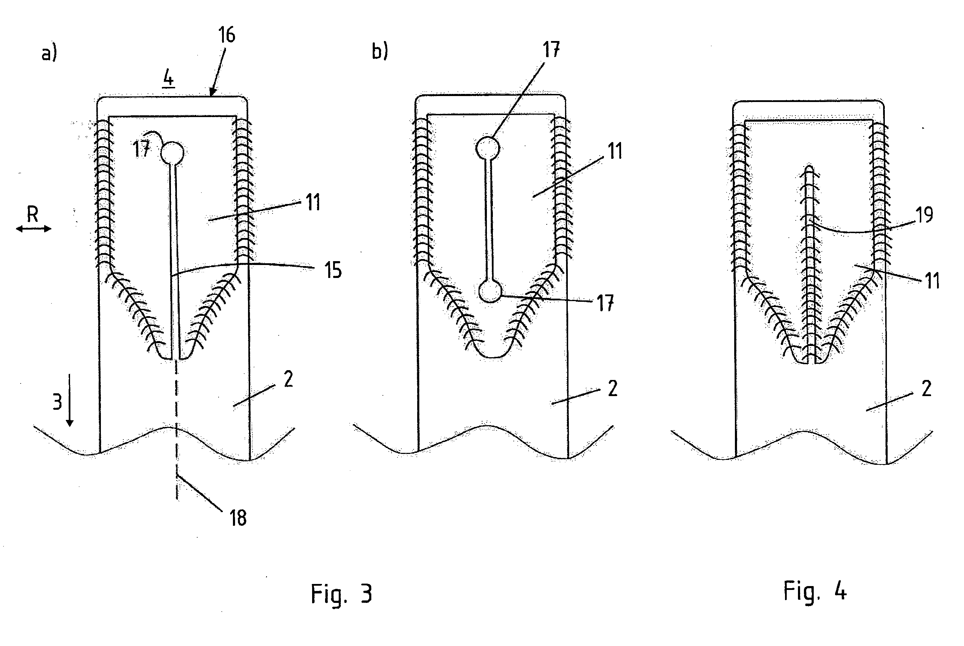

Erfindungsgemäß ist gemäß Figur 3a ein Entlastungsschlitz 15 innerhalb des Verstärkungsblechs 11 vorgesehen, der eine Ausnehmung 17 in der eingezeichneten Radialrichtung R kompensiert. Erfindungsgemäß weist weiterhin der Entlastungsschlitz 15 an seinem Ende 16 optional eine Ausnehmung 17 auf, die hier weitere Spannungsrisse innerhalb des Entlastungsschlitzes 15 verhindert. In der hier dargestellten Ausführungsvariante verläuft der Entlastungsschlitz 15 von dem äußeren Ende 16 des Torsionsprofils 2 hin in Längsrichtung 3 des Torsionsprofils 2, so dass er im Wesentlichen in Richtung einer Mittellängsachse 18 des Torsionsprofils 2 orientiert ist. Im Rahmen der Erfindung ist es jedoch auch vorstellbar, dass der Entlastungsschlitz 15 in einem Winkel zur Mittellängsachse 18 verläuft oder aber auch einen wellenförmigen oder sinusförmigen Verlauf aufweist. Der Entlastungsschlitz 15 ist hier ferner derart ausgebildet, dass er an einem Ende 16 des Torsionsprofils 2 durchgängig ausgebildet ist, wobei der restliche Bereich des Verstärkungsblechs 11 durch den Entlastungsschlitz 15 getrennt ist.

Im Rahmen der Erfindung ist es jedoch auch vorstellbar, dass der Entlastungsschlitz 15 beispielsweise nur über einen mittleren Längenabschnitt innerhalb des Verstärkungsblechs 11 selber verläuft. Eine solche Ausführungsvariante ist in Figur 3b dargestellt. Hier weist der Entlastungsschlitz 15 an seinem jeweiligen Ende eine Ausnehmung 17 auf und ist nicht durch das Verstärkungsblech 11 vollständig durchgehend verlaufend.

Erfindungsgemäß ist in Figur 4 das Verstärkungsblech 11 durch eine weitere Fügenaht 19 derart miteinander gekoppelt worden, dass der Entlastungsschlitz 15 durch die Fügenaht 19 aufgefüllt ist. Bei der Fügenaht 19 kann es sich ebenfalls um eine Schweißnaht oder aber auch beispielsweise um eine Lotnaht o. ä. handeln.

### Bezugszeichen:

- 1: - Verbundlenkerachse
- 2: - Torsionsprofil
- 3: - Längsrichtung zu 2
- 4: - Enden zu 2
- 5: - Längsschwinge
- 6: - C-förmiger Querschnitt
- 7: - Bodensteg
- 8: - Schenkel
- 9: - äußere Kante zu 8
- 10: - Talbereich
- 11: - Verstärkungsblech
- 12: - Längskante zu 11
- 13: - Innenseite zu 8
- 14: - Schweißnaht
- 15: - Entlastungsschlitz
- 16: - Ende zu 15
- 17: - Ausnehmung
- 18: - Mittellängsachse zu 2
- 19: - Fügenaht

- I: - Innenbereich
- R: - Radialrichtung

## Patentansprüche

1. Verfahren zum Herstellen einer Verbundlenkerachse (1), wobei die Verbundlenkerachse (1) aus einem Torsionsprofil (2) sowie endseitig an dem Torsionsprofil (2) angeordneten Längsschwingen (5) ausgebildet wird, **gekennzeichnet, durch** folgende Verfahrensschritte:
- Bereitstellen eines im Querschnitt c-förmigen oder u-förmigen Torsionsprofils (2),
- Bereitstellen eines mit einem Entlastungsschlitz (15) versehenen Verstärkungsbleches (11),
- Einsetzen des Verstärkungsbleches (11) in einen endseitigen Innenbereich (I) des Torsionsprofils,
- Verschweißen des Verstärkungsbleches (11) an der Innenseite (13) eines ersten Schenkels (8),
- Verschweißen des Verstärkungsbleches (11) an der Innenseite (13) des zweiten Schenkels (8) und Verschließen des Entlastungsschlitzes (15) **durch** thermisches Fügen,
- Koppeln der Längsschwingen (5) mit dem Torsionsprofil (2).

2. Verfahren nach Anspruch 1, **dadurch gekennzeichnet, dass** der Entlastungsschlitz (15) in Richtung der Mittellängsachse (18) des Torsionsprofils (2) orientiert wird.

3. Verbundlenkerachse (1) für ein Kraftfahrzeug, aufweisend ein Torsionsprofil (2) mit endseitig an dem Torsionsprofil (2) angeordneten Längsschwingen (5), wobei das Torsionsprofil (2) im Querschnitt C-förmig oder U-förmig konfiguriert ist und in einem Innenbereich (I) jeweils endseitig ein Verstärkungsblech (11) mit den Innenseiten (13) der Schenkel (8) thermisch gefügt ist, hergestellt nach einem Verfahren gemäß Anspruch 1, wobei das Verstärkungsblech (11) einen Entlastungsschlitz (15) aufweist, wobei der Entlastungsschlitz (15) insbesondere in Richtung einer Mittellängsachse (18) des Torsionprofils (2) orientiert ist, **dadurch gekennzeichnet, dass** der Entlastungsschlitz (15) durch thermisches Fügen verschlossen ist.

4. Verbundlenkerachse nach Anspruch 3, **dadurch gekennzeichnet, dass** der Entlastungsschlitz (15) einen geradlinigen Verlauf oder einen mäanderförmigen Verlauf aufweist.

5. Verbundlenkerachse nach Anspruch 3 oder 4, **dadurch gekennzeichnet, dass** der Entlastungsschlitz (15) endseitig eine Ausnehmung (17) aufweist.

6. Verbundlenkerachse nach einem der Ansprüche 3 bis 5, **dadurch gekennzeichnet, dass** das Verstärkungsblech (11) Verstärkungsprofilierungen, insbesondere Sicken und/oder Mulden aufweist.

7. Verbundlenkerachse nach einem der Ansprüche 3 bis 6, **dadurch gekennzeichnet, dass** die Verbundlenkerachse (1) aus einer Stahllegierung oder einer Leichtmetallegierung ausgebildet ist.

8. Verbundlenkerachse nach Anspruch 3, **dadurch gekennzeichnet, dass** das Verstärkungsblech (11) zur Mitte des Torsionsprofils (2) optional an den Bodensteg (7) des Torsionsprofils (2) angelegt ist und an dem Ende (4) des Torsionsprofils (2) im Wesentlichen mit der äußeren Kante (9) der Schenkel (8) abschließend ausgebildet ist.

## Claims

1. Method for producing a twist-beam rear axle (1), the twist-beam rear axle (1) being formed of a torsion profile (2) and longitudinal links (5) arranged on the ends of the torsion profile (2), **characterised by** the method steps of:
- providing a torsion profile (2) having a C-shaped or U-shaped cross section,
- providing a reinforcement plate (11) provided with a relief slot (15),
- inserting the reinforcement plate (11) into an end-side inner region (I) of the torsion profile,
- welding the reinforcement plate (11) to the inner side (13) of a first leg (8),
- welding the reinforcement plate (11) to the inner side (13) of the second leg (8) and closing the relief slot (15) by thermal joining,
- coupling the longitudinal links (5) to the torsion profile (2).

2. Method according to claim 1, **characterised in that** the relief slot (15) is orientated in the direction of the central longitudinal axis (18) of the torsion profile (2).

3. Twist-beam rear axle (1) for a motor vehicle, comprising a torsion profile (2) having longitudinal links (5) arranged on the endsof the torsion profile (2), the torsion profile (2) being configured to have a C-shaped or U-shaped cross section and a reinforcement plate (11) being thermally joined to the inner sides (13) of the leg (8) at each end in an inner region (I), said twist-beam rear axle being produced according to a method according to claim 1, the reinforcement plate (11) comprising a relief slot (15), the relief slot (15) being orientated in particular in the direction of a central longitudinal axis (18) of the torsion profile (2), **characterised in that** the relief slot (15) is closed by thermal joining.

4. Twist-beam rear axle according to claim 3, **characterised in that** the relief slot (15) extends in either a straight or a meandering manner.

5. Twist-beam rear axle according to either claim 3 or claim 4, **characterised in that** the relief slot (15) comprises a recess (17) at the ends thereof.

6. Twist-beam rear axle according to any of claims 3 to 5, **characterised in that** the reinforcement plate (11) comprises reinforcement profilings, in particular beads and/or cavities.

7. Twist-beam rear axle according to any of claims 3 to 6, **characterised in that** the twist-beam rear axle (1) is formed of a steel alloy or a light metal alloy.

8. Twist-beam rear axle according to claim 3, **characterised in that** the reinforcement plate (11) is optionally placed on the bottom web (7) of the torsion profile (2) towards the centre of the torsion profile (2) and is formed such as to terminate substantially with the outer edge (9) of the leg (8)at the end (4) of the torsion profile (2).

## Revendications

1. Procédé de fabrication d'un essieu à traverse déformable en torsion (1), dans lequel l'essieu à traverse déformable en torsion (1) se présente sous la forme d'un profilé de torsion (2) ainsi que d'ailes longitudinales (5) aménagées aux extrémités sur le profilé de torsion, **caractérisé par** les étapes de procédé consistant à :
- aménager un profilé de torsion (2) en forme de C ou de U en coupe transversale,
- aménager une tôle de renfort (11) pourvue d'une fente de dégagement (15),
- insérer la tôle de renfort (11) dans une zone interne terminale (I) du profilé de torsion,
- souder la tôle de renfort (11) sur le côté interne (13) d'une première branche (8),
- souder la tôle de renfort (11) sur le côté interne (13) de la seconde branche (8) et fermer la fente de dégagement (15) par jonction thermique, et
- coupler les ailes longitudinales (5) au profilé de torsion (2).

2. Procédé selon la revendication 1, **caractérisé en ce que** la fente de dégagement (15) est orientée dans la direction de l'axe longitudinal central (18) du profilé de torsion (2).

3. Essieu à traverse déformable en torsion (1) pour un véhicule automobile, présentant un profilé de torsion (2) avec des ailes longitudinales (5) aménagées aux extrémités sur le profilé de torsion (2), dans lequel le profilé de torsion (2) est configuré en forme de C ou de U en coupe transversale et, dans une zone interne (I) respectivement aux extrémités, une tôle de renfort (11) est jointe thermiquement aux côtés internes (13) des branches (8), fabriqué selon le procédé de la revendication 1, dans lequel la tôle de renfort (11) présente une fente de dégagement (15) et dans lequel la fente de dégagement (15) est orientée en particulier dans la direction d'un axe longitudinal central (18) du profilé de torsion (2), **caractérisé en ce que** la fente de dégagement (15) est fermée par jonction thermique.

4. Essieu à traverse déformable en torsion selon la revendication 3, **caractérisé en ce que** la fente de dégagement (15) présente un tracé en ligne droite ou un tracé sinueux.

5. Essieu à traverse déformable en torsion selon la revendication 3 ou la revendication 4, **caractérisé en ce que** la fente de dégagement (15) présente aux extrémités un évidement (17).

6. Essieu à traverse déformable en torsion selon l'une quelconque des revendications 3 à 5, **caractérisé en ce que** la tôle de renfort (11) présente des profils de renfort, en particulier des moulures et/ou des cavités.

7. Essieu à traverse déformable en torsion selon l'une quelconque des revendications 3 à 6, **caractérisé en ce que** l'essieu à traverse déformable en torsion (1) est formé d'un alliage d'acier ou d'un alliage de métal léger.

8. Essieu à traverse déformable en torsion selon la revendication 3, **caractérisé en ce que** la tôle de renfort (11) est appliquée au centre du profilé de torsion (2) éventuellement sur la traverse (7) du profilé de torsion (2) et se termine, à l'extrémité (4) du profilé de torsion (2), sensiblement par l'arête externe (9) des branches (8).
